# EUROPEAN PATENT SPECIFICATION

(11) **EP 0 661 126 B1**
(45) Date of publication and mention of the grant of the patent: **03.12.1997**
(21) Application number: 94309786.5
(22) Date of filing: 23.12.1994
(51) Int. Cl.: B23K 20/08

(54) **Clad metal produced by explosive welding, and method for producing the same**
Durch Explosionsschweissen hergestelltes plattiertes Metall und Verfahren zu seiner Herstellung
Métal plaqué fabriqué par sondage par explosion et méthode pour sa fabrication

(30) Priority: 28.12.1993 JP 348901/93
(43) Date of publication of application: 05.07.1995
(73) Proprietor: Asahi Kasei Kogyo Kabushiki Kaisha, Osaka-shi Osaka 530 (JP)
(72) Inventor: Ujimoto, Yasuhiro, Takashima-gun, Shiga-ken (JP); Hirano, Kiyotaka, Dazaifu-shi (JP)
(74) Representative: Blake, John Henry Francis

(56) References cited:
- DE-A- 1 921 442
- US-A- 3 608 180
- WELDING INTERNATIONAL, vol.1, no.9, 1987, ABINGTON, CAMBRIDGE, GB pages 879 - 883 J. GROSCHOPP ET AL 'Explosively clad titanium steel composite'

## Description

### BACKGROUND OF THE INVENTION

### FIELD OF THE INVENTION

The present invention relates to improvement in explosive cladding method and clad metal, particularly to an explosive cladding method by which the bond strength and the impact properties of the bonded interface between metals of different kinds are increased, and relates also to an explosion-clad metal which possesses the improved bonded interface.

### DESCRIPTION OF THE RELATED ART

When joining two metallic material plates by means of explosive cladding method, it is necessary for a material, which is to be clad, to be appropriately accelerated by explosion of explosives, and collide with a base material at an angle which is within a certain range. Consequently, in the conventional explosive cladding method, appropriate collision speed and collision angle of the material to be clad (which is called as "clad material" hereinbelow) were prepared for the joining by setting a gap beforehand between the clad material and base material which are to be joined each other.

Roughly, there have been two kinds of methods for providing this gap, namely, parallel method and angular method, and generally the methods are distinguished according to the positional relation of the two metallic material plates, i.e., a method in which the gap between the clad material and base material is maintained at an approximately constant distance is referred to as parallel method, and another method in which a relative angle exists between the clad material and base material beforehand prior to joining is referred to as angular method.

Conventionally, joining of metallic materials by means of explosive cladding, either in parallel or angular method, was performed in the atmosphere, i.e., under the condition in which the gap between the two metallic material plates which are to be joined was filled with air.

Consequently, prior to joining, it was necessary for the clad material, which is flying owing to explosion of the explosives, to compress and to discharge air which exists within the gap, toward free space ahead. But, particularly in the case where the bonding area is large, there were cases where the compressed air remained without being discharged, or extremely high temperatures were reached owing to effects of adiabatic compression, which acted to prevent the clad material from colliding with the base material in a sequentially uniform manner, with the result that there were caused problems such as defects where cladding did not occur or where sufficient bond strength was not obtained.

Also, particularly in the case where the bonding area is large, the gap which is set beforehand becomes also large, so that there were caused influence of a clad material support member placed on the base material so as to maintain the gap (when the gap which must be maintained increases, the supporting member also must be made larger) and other influence of contamination owing to included foreign matters from the free air surrounding the gap, causing problems such as defects, e.g., imperfect cladding at the bonding or insufficient bond strength.

Accordingly, particularly proposal is made in Japanese Patent Publication 44-26542 entitled "Method of surface junction of metal members by means of explosives", in which the gap prior to junction is filled with hydrogen or helium gas which has higher sound transmission speed as compared to air, thereby relieving the compression impact which occurs between the plates at the time of explosive cladding, so as to decrease the joining or non-bonding boundary defects of the bonded interface.

Also, U.S.P. 3,608,180 entitled "COMPRESSED GAS STANDOFF FOR CLADDING" proposes filling the gap with air or an inert gas having a pressure sufficient to support the weight of both the clad material and the explosives disposed above the clad material so as to maintain the gap prior to joining, thereby making the provision of the support material (placed upon the base material) unnecessary, thus proposing a simple method for maintaining the gap, and proposing a method of preventing a bonded interface from being contaminated in a case where a large gap is required.

Mechanical characteristics such as bond strength of the explosion-clad metal are more or less decided by the cladding area ratio of both of the metals at the bonded interface, but is decisively influenced by the condition of the waving patterns formed on the bonded interface and the area ratio and composition of intermetallic compounds interposed in the bonded interface.

First, concerning the condition of the waving patterns existing on the bonded interface, the existence of a waving pattern with regular amplitude enhances the mechanical strength thereof owing to the zipper effect, when compared to a bonded interface which exhibits a straight line. Also, in a case where the metallurgical bond strengths of both metals are equal, the existence of waving patterns necessarily enhances bond strength per unit area of the clad metal as compared with a junction in another case where a straight line or interface exists, because the waving pattern increases an area of the direct bonded interface defined by both the metals when compared with the straight case.

On the other hand, the area ratio of and composition of intermetallic compounds existing on the bonded interface is affected by the amount of metal jet formed at the collision points upon explosive cladding, and the composition thereof. That is, immediately after the explosive cladding, these intermetallic compounds which exist on the bonded interface are not any diffusion phase precipitated by thermal equilibrium, but a most of them is metal jet formed at the time of explosive cladding which was not discharged but remained on the bonded interface. Generally, these intermetallic compounds are hard and brittle, so that in a case where these exist in the interface, the bond strength according to static evaluation and the impact properties according to dynamic evaluation along with the fatigue properties are greatly decreased, proportionately to increase of the area ratio of the intermetallic compound. Consequently, it is ideal that substantially no intermetallic compounds exist on the bonded interface, but in a case where the formed metal jet cannot be completely discharged, it is desirable that these intermetallic compounds exist locally in the form like as vortex street pattern along the waving pattern interface so that the area ratio of direct bonding may be as large as possible.

Further, in explaining the waving patterns, generally, it is known that both the magnitude of the wavelength and the wave height of the waving pattern formed on the bonded interface upon explosive cladding increases proportionately to the speed of collision and angle of collision between the clad material and the base material, and the form of the wave, i.e., the ratio of the wave height to wavelength is determined by the relative ratio of density between the clad material and the base material.

For example, in a case where the density of the clad material and the base material is approximately equal, i.e., clad metal where the density ratio of both is approximately 1, the waving pattern formed on the bonded interface exhibits a form similar to that of a sine waveform. If it is desired to increase the relative size of this waving pattern, this can be done by increasing either the motion speed at the point of impact or the collision angle, and this is specifically achieved by increasing the amount of explosives used, or increasing the explosion speed of the explosives, or setting the gap larger.

On the other hand, as the difference of density of both of the materials becomes larger, the waveform deviates from a sine form and is inclined, and the wave height / wavelength ratio becomes smaller. The reason why the waveform is inclined relates to the metal jet which is formed at the point of impact, and in a case where metals of the same kind symmetrically collide with each other this metal jet occurs at front positions along a center fine, but in another case of metals of different kinds, materials of different densities collide with each other with the result that the direction of the occurrence of the metal jet deviates to incline toward the side of the metal with the greater density.

When the waveform begins to incline, i.e., when the direction of metal jet occurrence begin to deviate, the discharging of the formed metal jet does not occur well. Consequently, the metal jet is apt to remain in the bonded interface, which causes the increase of intermetallic compounds interposed in the bonded interface after joining is performed. Further, in the bonded interface there occur discontinuous waves and vortex portions in the crests of the waves, which vortex portions becomes flat as the ratio of the wave height / wavelength becomes smaller, with the result that the area ratio of the whirl portion regarding the entire clad metal bonded area becomes greater.

As a result of this, along with the increase of the inclination of the wave, there occurs a greater amount of intermetallic compounds interposed in the interface after joining which intermetallic compounds are a factor deteriorating the joining characteristic.

In this way, in the case where the difference of density between different kinds of metals to be joined, that is, between a clad material and a base material is large, the waveform formed in the bonded interface is deformed, increasing the intermetallic compounds in the bonded interface, thereby deteriorating the bond strength or characteristic. However, in the USP 3,608,180, such deterioration of bond strength between metals with a great difference in density is not disclosed at all, nor is the existence of the problem recognized. Actually, an example disclosed therein is the case of joining of stainless steel and carbon steel, both of which have a relative density ratio of approximately 1. Also, the aforementioned Japanese Patent Publication 44-26542 makes no specific disclosure concerning the kinds of metals to be joined, and shows no recognition of the aforementioned problem, either.

DE-A-1921442 cited in the European Search Report discloses a technique for bonding a further titanium layer to a steel base material already clad with a titanium layer. The further titanium layer is spaced from the titanium-clad steel base by gas pipes welded to the respective surfaces to be bonded. Argon gas is introduced into the space between the layers to be bonded, and they are brought into contact by an explosive charge.

### SUMMARY OF INVENTION

In consideration of the problems of the prior art, as mentioned above, the present inventors had intensively studied the junction characteristics of clad metal such as bond strength and impact properties, etc., regarding the bonded interface formed by metal portions of a great density difference, and had guessed that concerning the conventionally performed explosive cladding method, a gas existing in a predetermined gap affects a waveform formed on the bonded interface. Then, the effect which the gas has on the clad metal after bonding was further researched, and several types of studies were conducted concerning several combinations of metallic materials of different kinds. During the research, the inventors noticed that in order to improve the characteristics of the bonded interface such as bond strength and impact properties, etc., it is effective to effect explosive cladding in a state in which air in the predetermined gap is replaced by argon gas having approximately the same pressure as that of the atmosphere, and that characteristics of the bonded interface of the clad metal obtained after explosive cladding could be remarkably improved. Then, further researching, the inventors had discovered that this improvement is extremely remarkable when the density ratio of a material of a relatively lighter weight to another material of a relatively heavier material (, that is, a value obtained by dividing the density of the lighter material by that of the other heavier material) is within a range between 0.4 and 0.7, and thereby had achieved the present invention.

According to the first aspect of the present invention, there is provided a production method for multi-layer clad metal by explosive cladding having at least two layers, according to claim 1. Essentially, the method comprises the steps of: preparing a clad material and a base material both of which have such a density ratio relationship as a value obtained by dividing the density of the relatively lighter metallic material by the density of the other heavier metallic material is within a range between 0.4 and 0.7; replacing air existing within a gap defined between the clad material and the base material, both of which are to be joined by explosive cladding, with argon gas having approximately the same pressure as that of the atmosphere; and effecting explosive cladding. According to the second aspect of the invention, there is provided a multi-layer clad metal having at least two layers different in kind from each other and produced by the production method of the invention, the clad metal having at least one bonded interface where the value (, that is, a relative density ratio) obtained by dividing the density of one relatively lighter metallic layer by the density of another heavier metallic layer is within a range between 0.4 and 0.7 so that intermetallic compounds interposed in the junction portion is decreased to thereby reduce the hardness thereof.

In the explosive cladding method of the present invention, it is important that the relative density ratio of the different kinds of metals which are to be joined is within the range of 0.4 and 0.7, and that the space defined between the clad material and the base material is filled with argon; other conditions or factors need not be restricted in particular.

Also, regarding the argon atmosphere, as the result of various studies, since the degree of effects obtained as the results thereof is almost proportional to an argon gas concentration in the gap since with the lapse of time there occurs change of the concentration of the argon gas after filling the gap with the argon gas, it is desirable that the gap is completely filled with 100% argon gas, however, from an industrial point of view, it is sufficient for the gap to be filled with 70% argon gas. Also, it is not necessary to raise the pressure of the gas filling the gap to a level more than the atmospheric pressure.

The method of the present invention is not restricted to clad metal formed of two layers of a clad material and a base material, but can be employed in production of 3-layer clad metal, 4-layer clad metal, or multi-layer clad metal of even more layers.

Also, upon production of multi-layer clad metal of at least 3 layers, it is possible to simultaneously join the materials which form each bonded interface by one explosive cladding, but it is also possible to employ a method of joining one layer of a clad material to a base material, and then sequentially perform explosive cladding to join other clad material to the upper layer thereof.

Further, it is also permissible to perform this production by the steps of: first effecting explosive cladding between the materials to be positioned in the middle of the clad metal; and then joining this middle portion to other different kind metals which are to form the outmost layers, or after joins a clad material (which is used as base material) to the clad middle portion by explosive cladding of the middle material, then joining this clad composite to a base material.

Particularly, the method of the present invention is extremely effective regarding combinations of different kinds of metals where the density ratio of one lighter weight (smaller density) metallic material used for the clad or base material to another heavier metallic material used for the base or clad material is within a range between 0.4 and 0.7, and is particularly effective as a method for producing clad metal of explosive cladding having the following combinations: titanium or titanium alloy and steel; titanium or titanium alloy and nickel or nickel alloy; titanium or titanium alloy and copper or copper alloy; or titanium or titanium alloy and aluminum or aluminum alloy. Further, as the steel, there may be used, for example, alloy steel such as 9% nickel steel which is used at low temperature lower than room temperature, stainless steel such as SUS304 which is used at very low temperature.

In the combination of these metallic materials, it is usual to use, as a clad material, a material relatively smaller in density, however, it is possible to use, as the clad material, a material larger in density than that of the base material. Also, the combination of these metallic materials, as mentioned above, can be employed in the case of production method of 3-layer clad metal, 4-layer clad metal, and multi-layer clad metal of even more layers. Also, in any of the cases, there is such a case as the combination of these metallic materials forms a part of a multi-layer clad metal of 3 layers or more.

The densities of these metallic materials are given in Table 1. Also, the ratios of the relative density ratio of these metallic materials are given in Table 2.

**Table 1**

| Density of the metallic materials | |
|---|---|
| Metallic material | Density (g/cc) |
| Aluminum and aluminum alloy | 2.70 |
| Titanium and titanium alloy | 4.54 |
| Nickel and nickel alloy | 8.90 |
| Copper and copper alloy | 8.96 |
| Steel | 7.87 |
| Austenitic stainless steel | 7.8 - 8.0 |
| Ferritic stainless steel | 7.7 - 7.8 |
| Martensitic stainless steel | 7.8 - 8.0 |

**Table 2**

| Ratio of relative density of the metallic materials | |
|---|---|
| Combination of different kinds of materials | Relative Density Ratio |
| Aluminum / Titanium | 0.5947 |
| Titanium / Nickel | 0.5101 |
| Titanium / Copper | 0.5067 |
| Titanium / Steel | 0.5769 |
| Titanium / Stainless steel | 0.5675 - 0.5896 |

The present invention also includes a multilayer clad metal of explosive cladding which clad metal has at least two layers and which has improved characteristics regarding the bonding of the layers, according to claim 4. The multilayer clad metal of explosive cladding is obtainable by means of the explosive cladding method of the present invention, in which clad metal has at least one joining or bonded interface in which the relative density ratio is in the range between 0.4 and 0.7, and in which clad metal the intermetallic compounds interposed in the bonded interface is decreased, and the hardness of the intermetallic compounds is decreased.

In a conventional clad metal even in a case where the relative density ratio is 0.4 to 0.7 the bonded interface of different kinds of metals had a deformed (, that is, unfavorable) waving pattern and a large number of hard intermetallic components existed in the interface. However, in the present invention, when a cross-section is observed with an optical microscope, little intermetallic compound exists along the waving pattern of the bonded interface, or even in a case where there are intermetallic compounds along the interface, they exist in a scattered state along the interface in such extremely small lumps as to be localized in the vortex portions of alloy lumps, which whirl portions are caused on the crests of the waveform, and the hardness of the intermetallic compound becomes small, so that it becomes possible to obtain improved bonding characteristics, more specifically, remarkable improvement in the direct bond ratio of metallurgically bonding portion without intermetallic compounds of the cladding interface, bond strength and impact strength.

In the preferred clad metal of the present invention, at least one metal layer is formed of aluminum or aluminum alloy or titanium or titanium alloy. Further, the layer of these metals need not be restricted to one layer in a clad metal, but two or more layers of these metal can be used within a multi-layer clad metal of 3 or more layers.

A more preferred clad metal has a bonding or joining of at least a combination of the following: aluminum or aluminum alloy and titanium or titanium alloy; titanium or titanium alloy and nickel or nickel alloy; or titanium or titanium alloy and steel.

The clad metal of the present invention has remarkable improvement in the directly bonding area of the cladding interface, bond strength and impact strength. This is because the intermetallic compounds in the bonded interface becomes small in both number (, i.e., amount) and hardness. In the case of the intermetallic compounds existing along the bonded interface formed of aluminum (aluminum alloy) and titanium (titanium alloy), the hardness thereof does not exceed 250 Hv, preferably not exceed 190 Hv, and more preferably not exceed 160 Hv. Also, the hardness thereof in the bonded interface formed of titanium (titanium alloy) and nickel (nickel alloy) does not exceed 700 Hv, preferably not exceed 670 Hv, and more preferably not exceed 640 Hv. Further, the hardness thereof on the bonded interface formed of titanium (titanium alloy) and steel does not exceeds 710 Hv, preferably not exceed 640 Hv, and more preferably not exceed 610 Hv.

Regarding the wave height / wavelength ratio of the clad metal of the invention, it is preferred that this ratio is in a range explained below: in a case where the joining is aluminum / titanium, the ratio is 0.07 to 0.18, or more preferably 0.09 to 0.16; also, in another case where the joining is titanium / steel, the ratio is 0.10 to 0.32, or more preferably 0.12 to 0.30; and in still another case where the joining is titanium / nickel, the ratio is 0.13 to 0.32, or more preferably 0.15 to 0.30.

In these preferred clad metals, still more preferred clad metal is a 3-layer clad metal of explosive cladding wherein the combination of metals of different kind is in the order of: pure aluminum, titanium (titanium alloy), and steel; and aluminum alloy, titanium (titanium alloy), and steel.

Further, there are also such combinations of metals of different kind as: a 4-layer clad metal of explosive cladding having the order of aluminum alloy, pure aluminum, titanium (titanium alloy), and steel; a 4-layer clad metal in the order of pure aluminum, titanium (titanium alloy), nickel (nickel alloy), and steel; a 4-layer clad metal in the order of pure aluminum, titanium (titanium alloy), copper (copper alloy), and steel; a 4-layer clad metal in the order of aluminum alloy, titanium (titanium alloy), nickel (nickel alloy), and steel; and, a 4-layer clad metal in the order of aluminum alloy, titanium (titanium alloy), copper (copper alloy), and steel. Further, there are such combinations of metals of different kinds as: a 5-layer clad metal of explosive cladding having the combination in the order of aluminum alloy, pure aluminum, titanium (titanium alloy), nickel (nickel alloy) and steel; and a 5-layer clad metal of explosive cladding having the combination in the order of aluminum alloy, pure aluminum, titanium (titanium alloy), copper (copper alloy) and steel.

### BRIEF DESCRIPTION OF THE DRAWINGS

Fig. 1 is an optical microscope photograph of observation of a waveform formed on the bonded interface of titanium clad steel which is produced by the method of the present invention (filling the gap with argon gas).

Fig. 2 is an optical microscope photograph of observation of a waveform formed on the bonded interface of titanium clad steel which is produced by a conventional method (in which the gap is filled with surrounding air atmosphere).

Fig. 3 is a graph showing the measurement results of the micro-Vickers hardness near the bonded interface of the titanium clad steel produced by a conventional method (in which the gap is filled with air having the same pressure as that of the atmospheric air), the measurement being made for comparison in Example 4.

Fig. 4 is a graph showing the measurement results of the micro-Vickers hardness near the bonded interface of the titanium clad steel produced by the method of the present invention (in which the gap is filled with argon gas), the measurement being made in Example 4.

Fig. 5 is a graph showing the cutting resistance measurement results of the titanium clad steel, measured in Example 5.

Fig. 6 is a graph showing the Charpy impact value measurement results of the aluminum alloy / titanium interface produced by the method of the present invention, measured in Example 6.

Fig. 7 is a graph showing the Charpy impact value measurement results of the titanium / nickel interface produced by the method of the present invention, measured in Example 6.

### DETAILED DESCRIPTION OF THE PREFERRED EMBODIMENTS

The invention is described by use of examples disclosed below.

### Example 1

Titanium clad steel was produced by the method of the invention, i.e., by an explosive cladding method in which a gap between a clad material and a base material had been previously filled with argon gas prior to effecting the explosive cladding, and comparison thereof was made with titanium clad steel produced by a conventional method in which production was effected with a gap between a clad material and a base material being filled with the same atmosphere as the surrounding air.

When producing the titanium clad steel, there were used a commercially pure titanium plate (JIS H4600 TP28H) having a thickness of 6.9 mm, a width of 2950 mm and a length of 3340 mm as the clothing material, and a carbon steel plate for a boiler and pressure container (JIS G3103 SB450) having a thickness of 30 mm, a width of 2900 mm and a length of 3290 mm was employed as the base material, and 2 sets of titanium clad steel were produced by the explosive cladding method.

As regards conditions for the explosive cladding, the same conditions were used except the respects that, in the conventional method the gap between the clad material and the base material was filled with the surrounding air prior to explosive cladding and that in the invention the gap was filled with argon gas.

As for an explosive, there was used a powder explosive containing ammonium nitrate as the main ingredient which was adjusted to have an explosive speed of approximately 2,500 m per second. An explosives loading amount was set to be 5 Kg/m²/t (t being the actual plate thickness of the clad material), i.e., 30 Kg/m² per unit area.

The gap distance was set so that a distance at one side (width side) on which the explosive is initiated is 6 mm and so that a distance at another side (width side) opposing the initiation side is 8 mm. In order to make the intermediate gap from the initiation side to the opposite side gradually increase within a range from 6 mm to 8 mm, supporting members of appropriate size within a range from 6 mm to 8 mm were inserted in the intermediate gap.

Detonation was effected at the center point of the short length side (width side) of 2,950 mm, by use of electric detonator. The filling of the argon gas was effected as explained below.

Namely, similarly to a conventional method, after placing the base material on a sand bed in a horizontal manner, supporting members to maintain the gap were placed upon the base material with appropriate intervals, and the clad material was placed thereupon.

In the method of the invention, after this steps, the outer periphery of the gap was sealed by an air-tight paper tape with an adhesive thereon and with a width of 30 mm to 50 mm.

Although the tape for sealing the outer periphery of the gap may be a tape made of vinyl or a metal foil such as aluminum with an adhesive thereon may be used, inexpensive commercial adhesive tape was used from an economical point of view. Further, it is also possible to keep the air-tightness of the gap by wrapping both the rear face of the base material and the outer periphery of the gap by use of a piece of thin vinyl sheet or the likes, and this is recommendable in a case of producing clad steel of small dimensions.

After these steps, similarly to a conventional method, a paper frame of 100 mm in height was formed around the outer periphery of the clad material on the upper side thereof, which was secured by adhesive paper tape. Next, an appropriate amount of the explosive was loaded therein, and the thickness of the explosive was made to be uniform over the entire surface of the explosive. After the steps was completed, the gap between the clad material and the base material which was sealed by means of tape, etc., was filled with argon gas. That is, a hole of an appropriate size was provided in a part of the paper tape with an adhesive thereon which sealed the gap, and another hole was provided in another part of the paper tape at opposite side thereto which another hole was used to inject the argon gas. It is preferable to provide one hole for injecting the argon gas, rather than a plurality pieces of holes. On the other hand, the number of hole for discharging air by injecting argon gas in the gap may be at least one.

Regarding the argon gas, commercial argon gas of 99.9% purity charged in a bomb was used, and the amount of argon gas injected was made to be approximately 20 liters per minute while confirming the flow rate by means of a gas flow meter. An argon gas concentration detector was used to measure the argon concentration after the air had been discharged from the gap by the injection of the argon gas.

In the method of the invention, approximately 3 minutes were required in order that the air in the gas was replaced by argon gas, i.e., in order that the argon gas concentration became 99% or more when measured by means of the argon gas detector at the outer side of the hole provided in the paper tape as means for discharging the air from the gap. Argon gas was further injected for 7 minutes, however, there was seen no change in the argon gas concentration measured at the exhaust hole position. Thus, it was confirmed that approximately 100% replacement of air with argon gas had taken place, within the detection capability range of the argon gas detector. Further, the holes in the paper tape for argon gas replacement were sealed immediately after the completion of the gas replacement by use of a paper tape with an adhesive thereon.

Subsequently, the loaded explosive was detonated by use of electric detonator, thereby producing two sets of titanium clad steel of explosive cladding. The explosive cladding of the materials was effected within 5 minutes after finishing the filling of the gap with argon gas.

It was confirmed that the titanium clad steels obtained by explosive cladding in both the present invention method and the conventional method were completely joined, by use of ultrasonic flaw detection testing.

### Example 2

The bond strength of the interface of the clad steels produced in the Example 1 was examined regarding both the method of the present invention and the conventional method. When examining the bond strength, the shearing test specified in JIS G 0601 "Testing method of clad steel" was effected.

The shearing test pieces were prepared from the side of the termination of explosion spaced apart by about 3,150 mm from the starting point of detonation, and in a manner so that each test piece was prepared from the same position. Further, regarding each block of a state prior to machining into the test piece, heat treatment at 540°C for 3 hours followed by furnace cooling was effected which was usually effected as means for relieving work hardening of the bonded interface. As the result of the shearing testing, the obtained shearing strength in the case of the conventional method was in a range of 14.2 Kgf/mm² to 20.5 Kgf/mm² (number of experiments = 5), with an average value of 18.1 Kgf/mm², but in another case of the method of the present invention, the range was 24.3 Kgf/mm² to 32.6 Kgf/mm² (number of experiments = 7), with an average value of 29.7 Kgf/mm², indicating remarkably greater shearing strength as compared to the conventional method. The results of the shearing test are shown in Table 3.

The shearing test results of the clad steel produced by the conventional method were not only lower in strength, but also were broken along the bonded interface. On the other hand, clad steels produced by the present invention in which the gap was filled with argon gas were not only stable with a high bond strength, but were broken within the titanium layer in the vicinity of the bonded interface.

Thus, it has been proven that the clad steel produced by the present invention has excellent bond strength when compared with clad steel produced by the conventional method.

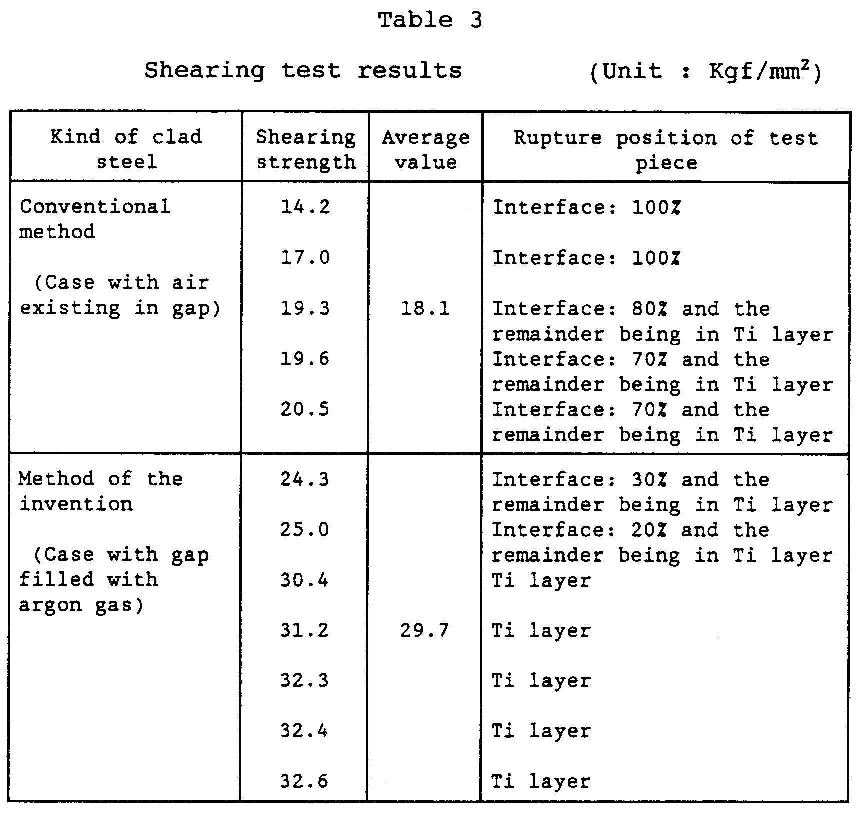

### Example 3

The waveforms of and the structure of the bonded interface of the two kinds of titanium clad steels produced by the methods described in the Example 1 were observed, and comparison of both of them was made.

Test pieces for observation of waveform and structure were prepared from an explosion termination portion spaced apart about 3,200 mm from the start point of detonation, and each clad steel was observed from the same position.

The direction of observation was parallel to the direction of the propagation of explosion, i.e., in the direction of progression of explosive cladding. As the result of observing the waveforms formed on the bonded interface, the interface waveform formed while filling the gap with the surrounding air had a fairly large waveform dimensions such as wavelength of 1,860 µm and wave height of 420 µm, and there were caused many intermetallic compounds (alloy lumps). On the other hand, the interface waveform of the clad steel formed by explosive cladding after the gap had filled with argon gas had relatively small waveform dimensions of wavelength of 1,330 µm and wave height of 210 µm, and there were caused very little intermetallic compounds.

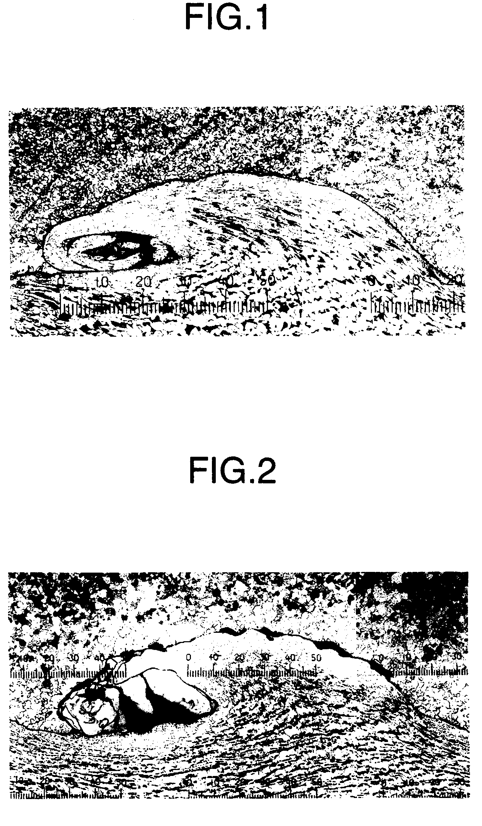

Thus, it has been proven that the clad steel produced by the present invention has little intermetallic compounds (alloy lumps) along the bonded interface when compared with clad steel produced by the conventional method. The results of observation of the waveforms formed along the bonded interface of the clad steel produced by the method of the invention are shown in Fig. 1, those of the clad steel produced by the conventional method are shown in Fig. 2, and the size of the waveform and the amount of alloy lumps are shown together in Table 4.

**Table 4**

| Dimensions of waveform formed on junction interface and the amount of alloy lumps | | | |
|---|---|---|---|
| | Wavelength | Wave height | Alloy lumps (Intermetallic compound) |
| Argon gas replacement in the present invention | 1330 µm | 210 µm | little |
| Conventional Method in air | 1860 µm | 420 µm | many |

### Example 4

Measurement of hardness near the junction was effected regarding two kinds of titanium clad steels produced by the methods described in Example 1 to thereby effect comparison therebetween.

As the test piece for measuring hardness, the test pieces which were prepared for the observation of waveforms formed in the bonded interface were also used, i.e., these were taken from the explosion termination side spaced apart about 3,200 mm from the start point of detonation, and each clad steel was observed from the same position. The hardness was measured parallelly to the propagation of explosion, that is, along a line which crosses the bonded interface vertically, with respect to the face of the test piece observed parallelly to the direction of progression of explosive cladding. Further, the hardness of the intermetallic compounds (alloy lumps) interposed in the bonded interface was measured by a micro Vickers hardness testing machine, the load weight placed upon the diamond indenter being 200 g for measurement of the intermetallic compounds (alloy lumps) and 500 g for measurement of the hardness near the bonded interface, with a weight load time of 15 seconds.

As the result of measuring of the hardness near the bonded interface, the bonded interface portion of the clad steel formed by explosive cladding with air left in the gap had a hardness of Hv 190 to Hv 230 within a range of 0.1 mm to 1.0 mm spaced apart from the interface toward the titanium side, and the hardness increased as the measurement position approached the interface. Further, in the direction from the interface toward the steel side, there was observed a hardness to Hv 170 to Hv 290 within a range of 0.1 mm to 1.0 mm spaced apart from the interface, and the hardness increased as the measurement position approached the interface. On the other hand, the interface of the clad steel formed by explosive cladding after filling the gap with argon gas had, within the measurement area of the same distance from the interface as that of the first case, hardness ranges of Hv 190 to Hv 230 on the titanium side and of Hv 180 to Hv 280 on the steel side, and further, exhibited the same manner of increase in hardness when approaching the interface, thereby indicating that there is substantially no change when compared to the clad steel produced by the conventional method.

Also, by measuring the hardness of the intermetallic compounds (alloy lumps), the hardness of the alloy lumps in the clad steel formed by explosive cladding with the gap being filled air was about Hv 466 to Hv 878 in the vortex portion of the leading edge of the waveform, with an average of Hv 704 (n = 32). On the other hand, the hardness of the intermetallic compounds (alloy lumps) of the clad steel formed by explosive cladding with the gap being filled with argon gas was about Hv 334 to Hv 610, with an average of Hv 457 (n = 21), and was generally softer in hardness than clad steel produced by the conventional method by about Hv 130 to Hv 268, and, had such a substantial difference in hardness as an average of Hv 247. Further, the hardness of these intermetallic compounds (alloy lumps) was about 3 times greater than the maximum hardness measured near the explosive cladding interface (for example, about Hv 290 was measured on the steel side near the interface).

Consequently, it has been proved that in the present invention the hardness of the inclusion of intermetallic compounds (alloy lumps) along the interface is smaller than that of clad steel produced by the conventional method.

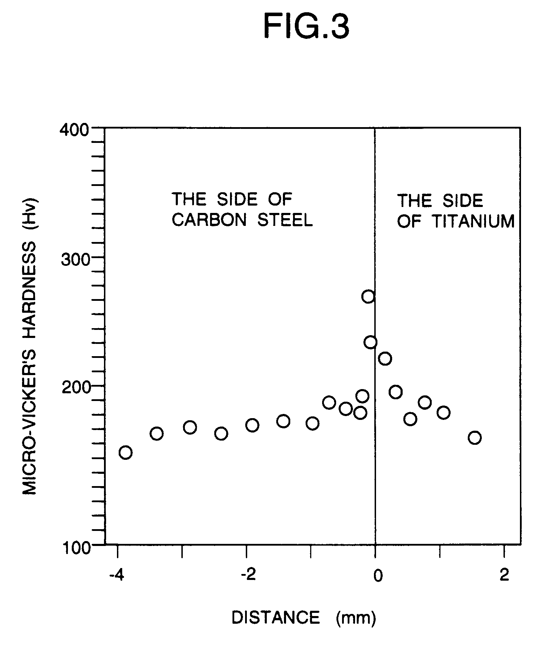

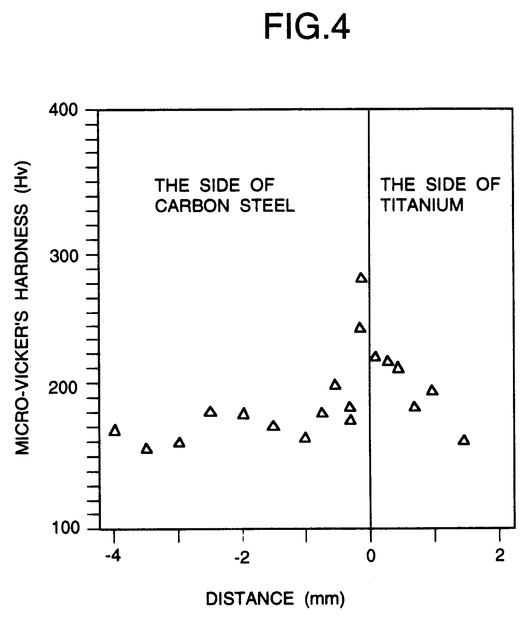

The results of the measurements of hardness near the bonded interface of the steel clad produced by the conventional method is shown in Fig. 3, and that of the clad steel produced by the method of the present invention is shown in Fig. 4. Also, the results of the hardness measurements regarding the alloy lumps are shown together in Table 5.

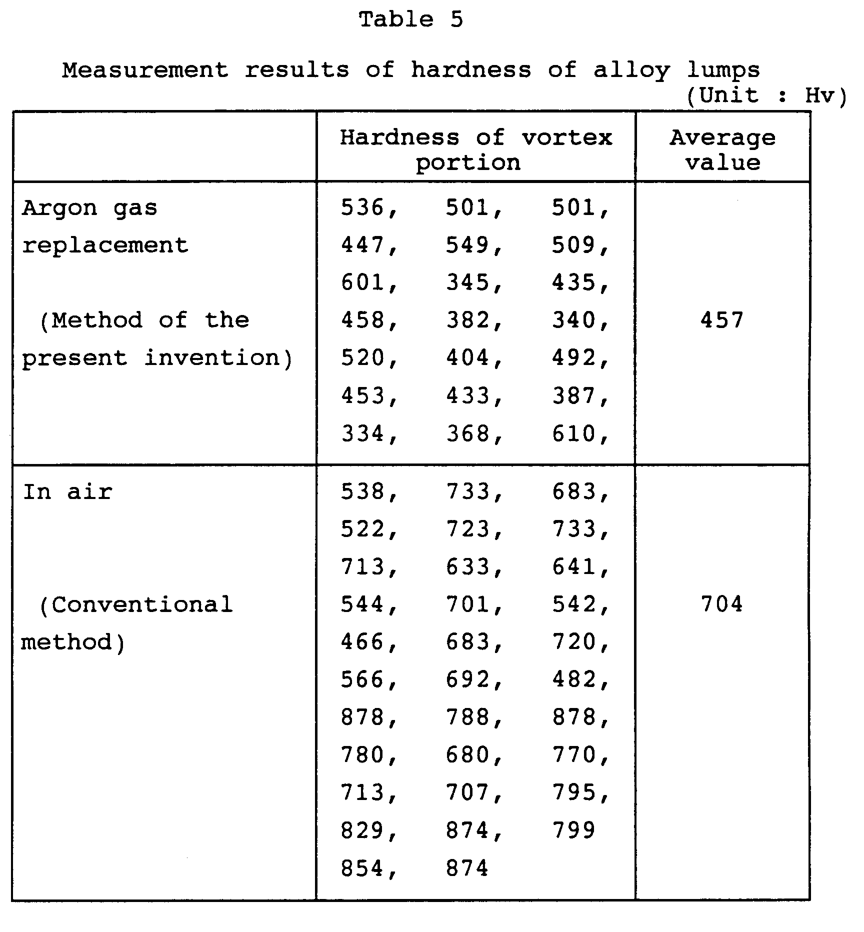

### Example 5

Drilling was effected regarding the two kinds of titanium clad steel produced by the methods described in Example 1, and the cutting force during the drilling was examined.

Drilling is a working in which a through hole is formed from the titanium side of the clad metal in the direction of the thickness thereof by use of an exclusive machine. Usually, tube plates fit in heat exchangers have many such holes, into which holes the heat exchanging tubes are joined by mechanical engagement or by welding. In general, this drilling working is effected when clad steel is used for heat exchangers, etc.

In this example, the cutting resistance was evaluated by use of the value of load maximum current value measured during the drilling. The machine for the drilling was MILLING MACHINE MAZAK V-800 (manufactured by YAMAZAKI SEIKO LTD.). The conditions of the drilling are disclosed below.

### Drill Used

- Name:: TAPER SHANK TWIST DRILL
- Diameter:: 25 mm
- Material:: SKH-9 equivalent product (Manufactured by Kobe Seikojo HSS)

### Drill operation conditions:

- Revolutions:: 210 rpm
- Feed rate:: 0.405 mm/rev. (same speed as the speed of raising the material to be cut.)
- Cutting oil:: machine oil

Further, the cutting resistance of the cut material was measured by the following apparatus or instruments.
Whole load resistance was also measured, which is the sum of the load resistance acting during the drill rotating and the thrust resistance acting upon the tip of the drill bit when the cut material is being raised, by use of a measurement instrument manufactured by YOKOGAWA ELECTRIC WORKS LTD., an ammeter and a voltmeter of SPF CLASS 0.5. Drilling load resistance was also measured which acts upon the drill upon rotation, by use of an measurement instrument, CLAMP TESTER 3101, manufactured by HIOKI.

Regarding the examination of the cutting resistance, in order to make initial conditions identical together with the above-explained conditions, there was used a new drill for each drilling of titanium clad steel, and, drilling was effected sequentially from the first hole to the 24th hole.

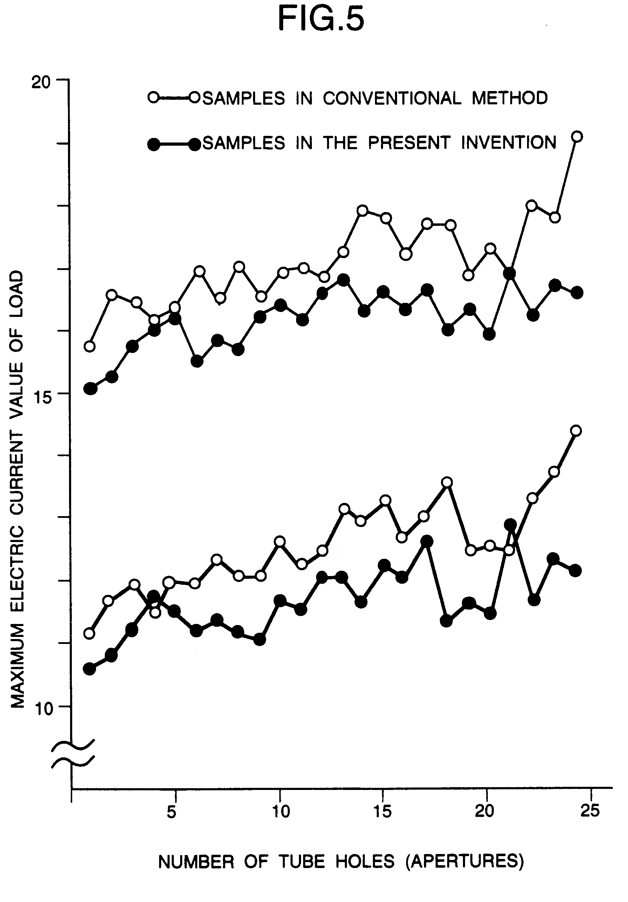

The measurement results of the cutting resistance are shown in Fig. 5, the abscissa thereof representing the consecutive number of the holes from No. 1 to No. 24, and the ordinate thereof represents the load maximum current.

As is clear from Fig. 5, both the drill load and the whole load increase as the number of holes increases, but the cutting resistance of the clad steel according to the present invention showed the lowest load current resistance. It is deemed that this tendency becomes clearer as the number of holes increases. Incidentally, the reason why the cutting resistance gradually increases while repeating increase and decrease, is assumed due to the effect of a built-up edge caused on the drill during cutting.

Consequently, it has been proved that the clad steel produced according to the method of the invention has less cutting resistance when effecting drilling and has superior workability for tube hole drilling in a case where it is used for heat exchange tube plates, etc., when compared with clad steel produced by the conventional method.

The results of this examination are backed up by the facts that in the invention the amount of intermetallic compounds (alloy lumps) interposed in the interface is less than that of the clad steel produced by the conventional method and that in the invention the hardness thereof is smaller than that of the conventional method.

### Example 6

A 4-layer clad steel was produced by the method of the invention, i.e., by the explosive cladding method having the steps of filling the gap between the clad material and the base material with argon gas, and then effecting the explosive cladding to thereby produce a clad metal having the order of aluminum alloy / titanium / nickel / stainless steel, and comparison was made regarding a 4-layer clad metal of aluminum alloy / titanium / nickel / stainless steel produced by the conventional method in which the gap between the clad material and the base material is filled with the same atmosphere as the surrounding air.

When producing the 4-layer clad steel of aluminum alloy / titanium / nickel / stainless steel, an aluminum alloy plate (JIS H4000 A3003P-O of 13 mm in thickness, 750 mm in width, and 2725 mm in length was used for the uppermost clad material, an commercial pure titanium plate (JIS H4600 TP28C) of 2 mm in thickness, 740 mm in width, and 2715 mm in length being used for an intermediate layer, a low-carbon nickel plate (JIS H4551 NLCP) of 2 mm in thickness, 730 mm in width, and 2705 mm in length being used for another intermediate layer, and a stainless steel plate (JIS 4303 SUS304L) of 20 mm in thickness, 700 mm in width, and 2675 mm in length was used for the base material. 44 Sheets of the 4-layer clad steel of aluminum alloy / titanium / nickel / stainless steel were produced through explosive cladding method in the case of the method of the present invention, and 42 sheets in the case of the conventional method.

As for the steps of producing the 4-layer clad steel, first, the nickel plate was joined to the stainless steel by explosive cladding. Next, after joining the titanium plate on top of the nickel plate of this clad steel, the aluminum alloy was sequentially joined by explosive cladding, thereby forming the 4-layer clad steel.

The conditions for explosive cladding were of the same except the respects that in the conventional method the gap between the clad material and the base material is filled with surrounding air and that in the present invention argon gas filled the two gaps provided between the aluminum alloy and titanium and between the titanium and nickel.

The constituents of the explosives employed in the production of the clad steel were substantially the same as those of the Example 1, and the explosive speed of the explosives was adjusted to approximately 2,800 m per second in the case where nickel plate was the clad material, adjusted to approximately 2,500 m per second in the case where titanium plate was the clad material, and adjusted to approximately 2,300 m per second in the case where aluminum alloy plate was the clad material.

The explosives loading amount was 20 Kg/m² for joining the aluminum / titanium interface, 16 Kg/m² for joining the titanium / nickel interface, and 20 Kg/m² for joining the nickel / stainless steel interface, with respect to each of the bonding (i.e. joining).

Also, the distance of the gap previously provided was 4 to 6 mm in the case of forming the aluminum alloy / titanium interface, 3 to 4 mm in the case of forming the titanium / nickel interface, and 3 to 4 mm in the case of forming the nickel / stainless steel interface. The reason why there is a variation regarding the gap distance in each case is because the gap is maintained smaller at the detonation side and larger at the explosion termination side; for example, in the joining of the aluminum alloy / titanium interface, the gap distance was 4 mm at the edge of the detonations side, and 6 mm at the opposing explosion termination side. As the distance of the gap between the detonations side and the explosion termination side increases gradually from 4 mm to 6 mm, supporting members of appropriate size between 4 mm to 6 mm were inserted in the intermediate portion thereof.

First, ultrasonic flaw detection testing was effected regarding the clad steels produced in this manner, to examine the bonding state. The ultrasonic flaw detection testing was effected each time each explosive cladding was finished, and overall flaw detection was effected from the side of the nickel layer to titanium layer and the aluminum alloy layer. As a result of the ultrasonic flaw detection testing, the clad steel produced by the method of the present invention was found to be completely joined, that is, each of the bonded interfaces exhibited the same joining as the clad steel produced by the conventional method.

Next, impact testing was conducted to examine the bond strength of the explosive clad interface. As for the impact testing method, there was used the Charpy impact testing machine specified in the JIS Z2242 "Metallic material impact testing method", and the Charpy impact value was obtained from the No. 4 testing piece (2 mm - notched testing piece) specified in the JIS Z2202 "Metallic material impact testing piece".

The position of the testing piece was made to be the same position for each piece so that the testing data obtained from the clad steel produced by the method of the present invention and the clad steel produced by the conventional method was able to be directly compared, and was prepared from the position spaced apart 600 mm from the detonation point toward the explosion termination point and spaced apart 300 mm from the side edge. Also, the V-shaped notch in each test piece was machined on the test piece portion facing the explosion termination plane so that the hammer of the impact tester was applied from the detonation side (plane) toward the explosion termination side (plane). The test temperature was -196°C while using liquid nitrogen as a cooling agent.

The impact testing interface was two kinds, that is, an aluminum alloy / titanium interface and a titanium / nickel interface, both of which kinds was produced by the method according to the present invention and by the conventional method.

Regarding the number of the testing pieces one piece was prepared from each 4-layer clad steel with respect to each bonded interface, and 44 pieces were taken from the clad steels produced by the method of the present invention, and 42 pieces were taken from the clad steels produced by the conventional method, and testing was effected.

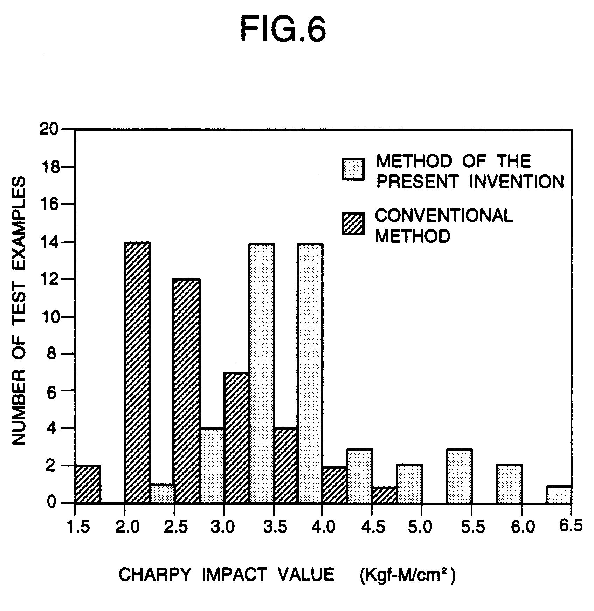

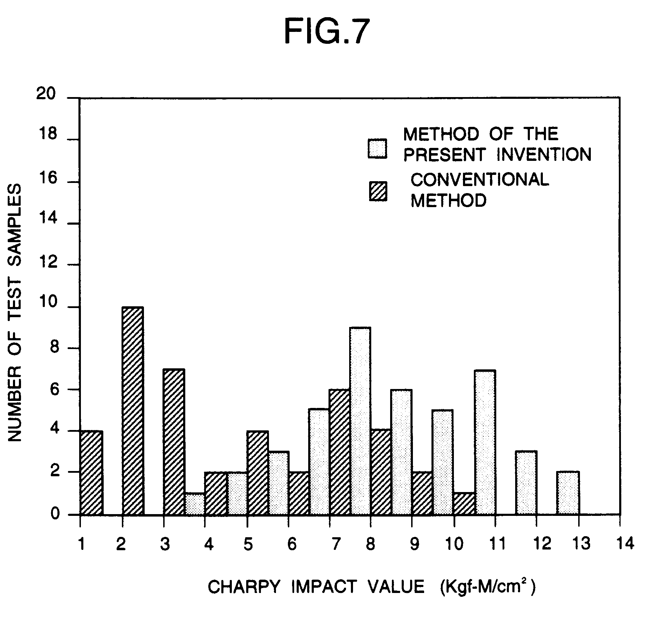

The Charpy impact value and the histogram thereof obtained by the impact testing are shown, regarding the aluminum alloy / titanium interface in Table 6 and Fig. 6, and regarding the titanium / nickel interface in Table 7 and Fig. 7.

As the result of the Charpy impact testing as to the aluminum alloy / titanium interface, the impact value of the clad steel produced by the method of the present invention was 2.50 to 6.13 Kgf-M/cm² and the average value thereof is 3.84 kgf-M/cm².

Since the impact value of the clad steel produced by the conventional means was 2.00 to 4.88 Kgf-M/cm², and since the average value thereof is 2.86 Kgf-M/cm², it has been demonstrated that, when producing in the method of the present invention, the upper limit of the impact value is increased by about 26% and the average value thereof is increased by about 34% in comparison with the prior art method.

Also, as the result of the Charpy impact testing regarding the titanium / nickel interface, the impact value of the clad steel produced by the method of the present invention was 4.00 to 13.38 Kgf-M/cm², and the average value thereof was 8.49 kgf-M/cm².

Since the impact value of the clad steel produced by the conventional means is 2.00 to 10.88 Kgf-M/cm², and since the average value thereof is 4.99 Kgf-M/cm², it has been proved that, when producing in the method of the present invention, the upper limit of the impact value is increased by about 23%, and the average value thereof is increased by about 70% in comparison with the prior art.

It has thereby been demonstrated that with aluminum alloy / titanium bonded interface and titanium / nickel interface junction of a 4-layer clad steel of aluminum alloy / titanium / nickel / stainless / steel produced by the method of the present invention, the bonded interface has a higher Charpy impact value than a 4-layer clad steel produced by the conventional method.

Consequently, it has been proved that, by using the method of the present invention, clad steel with remarkable mechanical bond strength which is represented by the Charpy impact testing can be obtained.

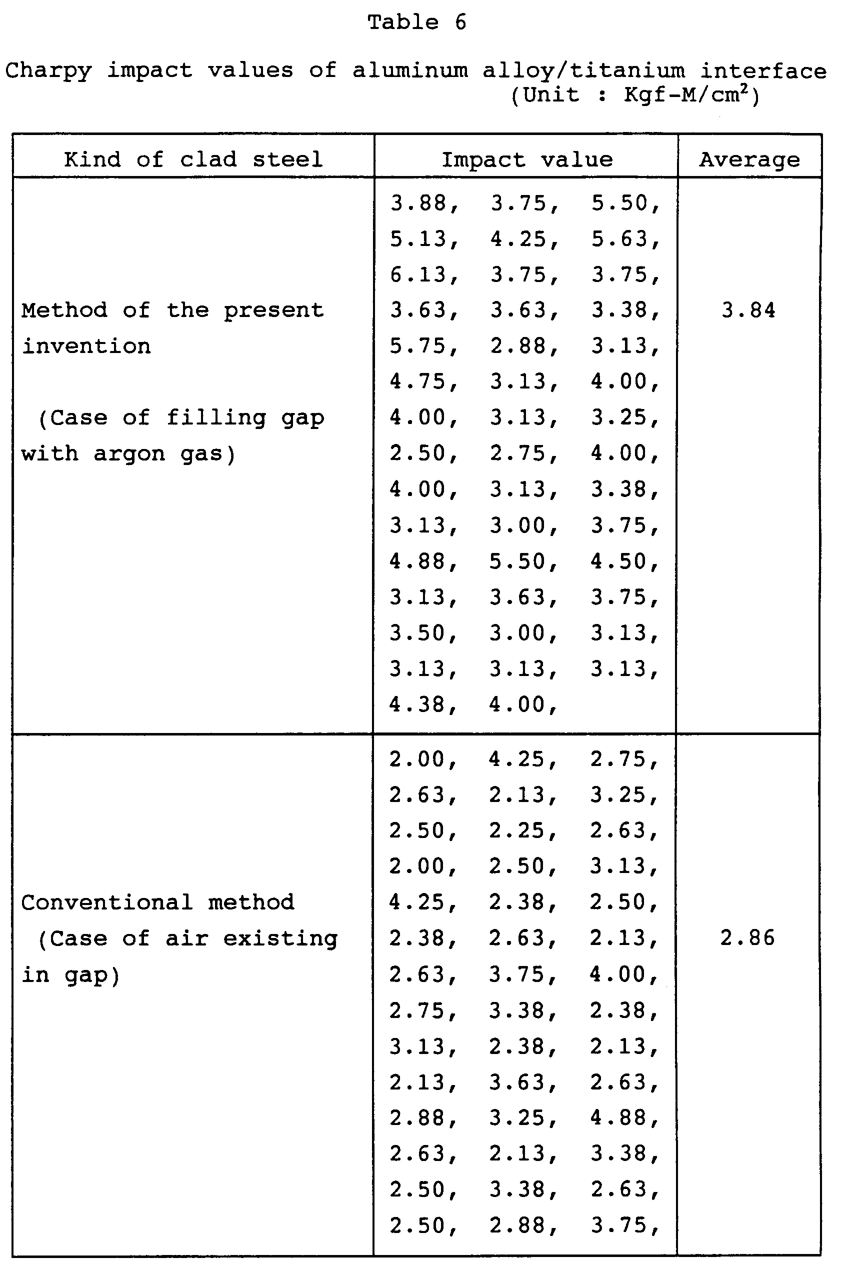

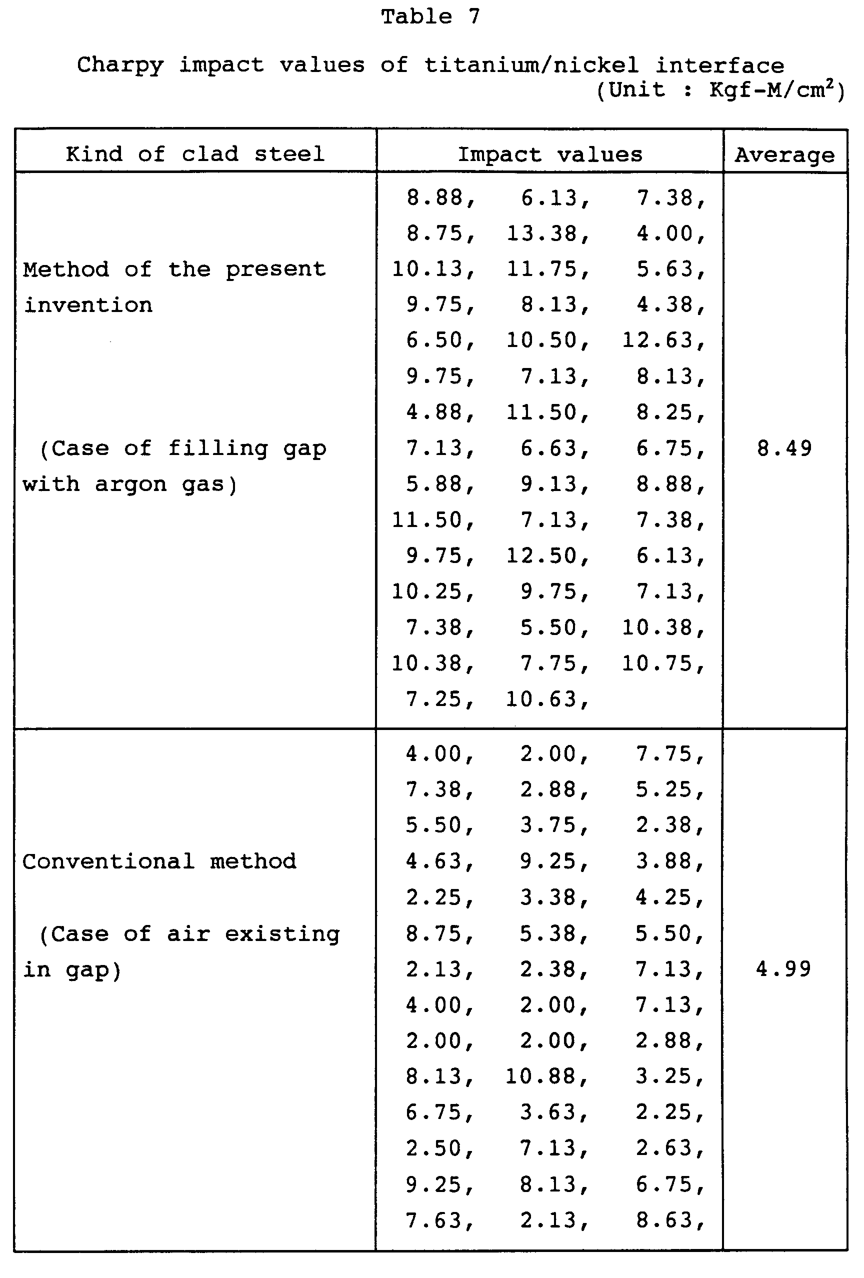

### Example 7

Aluminum / titanium clad metal was produced by the method of the present invention, and comparison was made with aluminum / titanium clad metal produced by the conventional method.

For production of the aluminum / titanium clad metal, an aluminum plate (JIS H4000 A1050P) of 5 mm in thickness, 240 mm in width, and 440 mm in length was used for the clad material, a titanium plate (JIS H4600 TP28H) of 9 mm in thickness, 200 mm in width, and 400 mm in length was used for the base material. The explosive cladding in the invention was effected under the same conditions as that of the conventional method except the respects that in the conventional method the gap between the clad material and the base material is filled with the surrounding air prior to explosive cladding and that the gap is filled with argon gas in the present invention, and one clad metal regarding each of the present invention method and the conventional method were produced (, that is, two clad metal sheets in total) for making comparison each other. Further, the operation of filling the gap with argon gas in the method of the present invention was effected in the same manner as in Example 1.

Both of the clad metals obtained by the explosive cladding, that is one of the present invention and one of the conventional method, were confirmed to be joined perfectly by means of ultrasonic flaw detection testing with the exception of an area of a few millimeters along the outer periphery of the clad metal in which area the joining did not occur.

Next, regarding the two kinds of aluminum / titanium clad metals, the hardness of the intermetallic compounds (alloy lumps) interposed in the bonded interface was measured, and they were compared.

The test pieces for measurement of hardness were prepared from approximately the center of the clad metal, and the hardness measurement was effected along the plane of the test piece which plane was parallel to the direction of the propagation of the explosion, i.e., in the direction of progression of the explosive cladding. A micro Vickers hardness test machine was used for the measurement; the load weight placed upon the diamond indenter was 100 g, with a weight load time of 15 seconds.

By measuring the hardness of the alloy lumps, it was found that the hardness of the alloy lumps in the clad metal which was formed by the conventional explosive cladding with the gap filled with the surrounding air was about Hv 176 to Hv 330 in the vortex portion of the leading edge of the waveform, an average thereby being Hv 243 (n = 13). On the other hand, the hardness of the alloy lumps of the clad metal formed by the explosive cladding in the invention with the gap being filled with argon gas was about Hv 132 to Hv 156, an average thereof being Hv 143 (n = 9), and these hardness values were lower than those of clad steel produced by the conventional method by about Hv 44 to Hv 174, and, there occurred such a substantial difference in hardness as an average difference of Hv 100.

The results of the hardness testing effected regarding the alloy lumps are shown together in Table 8.

Consequently, it has been proved that the hardness of the alloy lumps interposed in the bonded interface is smaller in the clad metal produced according to the method of the present invention than those in the clad metal produced by the conventional method.

**Table 8**

| Measurement results of micro-Vickers hardness of intermetallic compounds in aluminum/titanium clad metal interface | | |
|---|---|---|
| Clad metal production method | Hardness of alloy lumps | Average value |
| Method of the present invention (Explosive cladding after filling gap with argon gas) | 156, 152, 136, 139, 136, 157, 132, 138, 143, | 143 |
| Conventional method (Explosive cladding with gap filled with the surrounding air) | 210, 325, 330, 193, 190, 274 176, 221, 206, 196, 238, 299, 300, | 243 |

### Example 8

Titanium / nickel clad metal was produced by the method of the invention, and comparison was made with titanium / nickel clad metal produced by the conventional method.

For production of the titanium / nickel clad metals, titanium plates (JIS H4600 TP28C) of 2 mm in thickness, 240 mm in width, and 440 mm in length were used for the clad material, nickel plates (JIS H4551 NNCP) of 6 mm in thickness, 200 mm in width, and 400 mm in length were used for the base material. Further, the conditions of the explosive cladding were of the same between the present invention and the conventional method with the exception of the respects that the gap between the clad material and the base material was filled with the surrounding air prior to explosive cladding in the conventional method and that the gap was filled with argon gas in the present invention, and one clad metal regarding each of the methods was produced (2 sheets in total) for making comparison each other. Further, the operation of filling with argon gas according to the method of the invention was effected in the same manner as in Example 1.

Next, regarding the two kinds of titanium / nickel clad metals, the hardness of the alloy lumps interposed in the bonded interface was measured, and they were compared. The hardness testing was effected under the same conditions as in Example 7 with the exception of the respect that the load weight placed upon the diamond indenter was 200 g.

By measuring the hardness of the alloy lumps, it was found that the hardness of the alloy lumps in the clad metal formed by the explosive cladding with the gap filled with the surrounding air was about Hv 582 to Hv 799 in the whirl portion of the leading edge of the waveform, an average thereof being Hv 698 (n = 9). On the other hand, the hardness of the alloy lumps in the clad metal formed by the explosive cladding with the gap filled with argon gas was about Hv 346 to Hv 639, an average thereof being Hv 478 (n = 14), and these hardness values were generally smaller than those of the clad metals produced by the conventional method by about Hv 160 to Hv 236, and there occurred such a substantial difference in hardness as an average value difference of about Hv 220.

The results of the hardness testing on the alloy lumps are shown together in Table 9.

Consequently, it has been proved that the hardness of the alloy lumps in the bonded interface in the invention is less than that of the clad metal produced by the conventional method.

**Table 9**

| Measurement results of micro-Vicker's hardness of intermetallic compounds in the titanium/nickel clad metal interface | | |
|---|---|---|
| Clad material production method | Hardness of alloy lumps | Average value |
| Method of the present invention (Explosive cladding after filling gap with argon gas) | 528, 369, 428, 346, 536, 373, 639, 522, 615, 586, 490, 379, 363, 518, | 478 |
| Conventional method (Explosive cladding while filling gas with the surrounding air) | 799, 698, 707, 582, 644, 746, 763, 759, 586, | 698 |

### Comparison Example 1

There is explained below a case where a method in which argon gas is used similarly to the method of the invention is applied to such combination as the relative density ratio of the clad material to the base material is about 1.

Stainless clad steel was produced, and comparison was made between the method in which the gap was filled with argon gas and the conventional method in which the gap is filled with the surrounding air.

For production of the stainless clad steel, a stainless steel plate (JIS G4304 SUS304L) of 20 mm in thickness, 1270 mm in width, and 6850 mm in length was used for the clad material, and a low-carbon steel plate (JIS G3103 SB450) of the same dimensions was used for the base material. The conditions of the explosive cladding regarding these two methods were of the same with the exception of the respect whether the gap between the clad material and the base material was filled with the argon gas or with the surrounding air prior to explosive cladding, and one clad metal plate regarding each of the two method (2 plates in total) were produced, and they were then compared with each other. Further, the operation of filling the gap with argon gas was effected in the same manner as in Example 1.

It was confirmed that both the clad steels obtained by the explosive cladding are completely joined at the bonded interface with the exception of an area of 20 mm to 50 mm around the outer periphery thereof in which the two layers were not joined.

By examining the waveform pattern formed on the bonded interface in each of the clad metals by means of an optical microscope, a sine-shaped waveform was observed at a position spaced apart about 3000 mm from the initiation point with a wave height of about 300 µm and wavelength of about 800 µm, and intermetallic compounds owing to residual metal jet existed in both the clad metals, however, the effects of filling the gap with the argon gas were not clearly observed.

Further, as the result of measurement of the strength of the bonded interface by means of shearing testing with respect to test pieces prepared from approximately the same area in the clad metals as those in the observation of the waveforms, the shearing strength of the clad steel produced by the method with the gap filled with the argon gas was in a range of 44.5 kgf/mm² to 46.3 kgf/mm², the strength of an average value being 45.5 kgf/mm², but the shearing strength of the clad steel produced by the conventional method was in a range of 43.9 kgf/mm² to 46.1 kgf/mm², the strength of an average value being 45.3 kgf/mm², and no remarkable difference could be found regarding the bond strength between them, as shown in Table 10.

**Table 10**

| Shearing test results of stainless clad steel | | |
|---|---|---|
| Material production method | Shearing strength | Average value |
| Clad steel produced in the method of present invention | 46.3 | 45.5 |
| | 45.7 | |
| | 44.5 | |
| Clad steel produced in the conventional method | 46.1 | 45.3 |
| | 45.8 | |
| | 43.9 | |

Further, the bond strength of each of them was compared by measuring tensile strength in the direction vertical to the bonded interface of the clad steel, with the result that both test pieces raptured from the base material steel layer other than the bonded interface, so that it was found that the bond strength of each of them was strongly joined and that there was no substantial difference therebetween. Incidentally, the tensile strength test pieces had a dumbbell shape and were machine-finished to have a parallel portion length of 20 mm and a parallel portion diameter of 8 mm so that the bonded interface was located at the center of the parallel portion.

### Comparison Example 2

There is described below a case where a method, in which the gap was filled with argon atmosphere prior to explosive cladding, is used with the relative density ratio of the cladding material to the base material being about 0.26.

Clad metals of explosive cladding of an aluminum alloy plate and a silver plate were produced, one of which clad metals was made while filling the gap with argon atmosphere, another of which clad metals was formed while filling the gap with the surrounding air, and they are compared with each other.

A silver plate of 99.99% in purity, 1 mm used in thickness, 400 mm in width, and 550 mm in length was used for the clad material, and an aluminum alloy plate (JIS H4000, A5083P-O) of 50 mm in thickness, 550 mm in width, and 700 mm in length was used for the base material, and one sheet regarding each of the two methods was produced.

The conditions of the explosive cladding in the two methods were of the same conditions with the exception of the respect that in one method the gap was filled with argon gas. Specifically, the clad material was located above the center of the base material, and the clad material was supported to have a gap of 3 mm between the clad material and the base material. The powder explosives of ammonium nitrate, which was adjusted to have an explosive speed of about 2,000 m per second, was loaded on the silver plate at the rate of 12 Kg/m², and was detonated from one corner of the silver plate by means of an electric detonator. The clad metals thus produced in this manner were subjected to ultrasonic flaw detection testing, and it was found that, with the exception of the respect that an area of a 2 to 4 mm around the outer periphery of each of the clad metals was not joined, both of the plates were completely joined in all the other areas regarding each of the clad metals.

Next, using these clad metals as clad materials, a 3-layer clad steel of explosive cladding formed of aluminum alloy / silver / stainless steel was produced while using a stainless steel plate (JIS G4304, SUS304L) of 50 mm in thickness, 400 mm in width, and 550 mm in length for the base material. Since in the clad material (Aℓ-Ag clad material) used here there occurred deformation and surface roughening due to explosive cladding thereof, this clad material had been flattened and corrected, and the silver surface had been polished to have a mirror surface before the explosion cladding of the stainless steel. Further, the explosive cladding to obtain joining between silver and stainless steel was effected in the atmospheric air.

In this way, the effects of filling the gap with argon gas were studied mainly with respect to the bonded interface which was formed between the aluminum alloy and silver in the 3-layer clad steel formed of A5083 + silver + SUS304L of (50 + 1 + 50)mm in thickness, 400 mm in width, and 550 mm in length.

First, by examining the waveform pattern formed on the bonded interface by means of an optical microscope, a waveform with a wave height of about 30 µm and wavelength of about 300 µm was observed regarding each of the clad metals, but the waveforms of both of them were inclined greatly with the result that intermetallic compounds owing to residual metal jet existed in great amounts. As there was found no clear difference between the two of them, the effects of the argon gas which filled the gap were not observed. Further, the interface strength of each of them was examined by measuring tensile strength in the direction vertical to the bonded interface regarding test pieces prepared from the same position in the clad metals which test pieces had a shape of a dumbbell with a parallel portion diameter of 6 mm and a parallel portion length of 80 mm. Both test pieces ruptured within the A5083 layer, that is, the bonded interface had a strength exceeding that of the material used in the explosive cladding, so that it was found that there was no substantial difference by the use of the argon gas. Also, Charpy impact test pieces each having a 2 mm V-shaped notch in the aluminum alloy / silver interface was prepared from the same position, and the impact values of them being compared, and it was found that both of them were within the range of 0.8 to 1.0 kgf-M/cm², so that there was observed no substantial difference by the use of the argon gas.

As described above, the multi-layer clad metal of explosive cladding of the present invention brings about decrease in the amount of occurrence of intermetallic compounds interposed in the bonded interface thereof although there is such a large relative density ratio as to be 0.4 to 0.7 between the clad material and the base material, and the hardness of these intermetallic compounds is also decreased. Thus, in the invention, it becomes possible to obtain superior mechanical properties of bonded interface represented by bond strength and impact properties. That is, when effecting the shearing test specified in the JIS and ASTM standards, etc., in the invention the shearing strength obtained thereby become high and stable. Also, when effecting impact testing, in the invention the impact value obtained thereby increases by 70% regarding average value in comparison with prior art.

Further, when effecting secondary working of the clad steel to manufacture mechanical parts having the clad steel bonded interface exposed outwards, that is, when the structure of the parts is such that the lateral cross-section of the explosive cladding interface is seen on the inner or outer surface of the parts (such as a joint for connecting structures made of materials different in kind or a joint for connecting tubings made of materials different in kind), it is possible to finish the clad metal without losing the intermetallic compounds (alloy lumps) from the bonded interface during mechanical cutting near the bonded interface by machine or during working the clad metal, because the intermetallic compounds (alloy lumps) interposed in the bonded interface are not very hard. Also, in the same way, since it is possible to prevent the intermetallic compounds from being lost from the bonded interface and to prevent the cracking propagation from occurring within the intermetallic compounds owing to high hardness and brittleness, the gas tight property of pipings can be enhanced.

Also, the method of production of cladding material of the present invention improves the structure of the bonded interface of different kinds of metals with a relative density ratio of 0.4 to 0.7 by effecting explosive cladding under an argon atmosphere, thereby providing a clad metal with the excellent bonding characteristics.

## Claims

1. A method of producing a multi-layer clad metal by explosive cladding of at least two metal layers, comprising:
providing a cladding metallic material and a base metallic material different from each other so that, in said two different metallic materials which are to form a bonded interface in the clad metal, the ratio of the density of the relatively lighter metallic material to the density of the other heavier metallic material ranges from 0.4:1 to 0.7:1;
positioning the two materials so that a gap is provided between the cladding material and the base material;
introducing argon gas into the gap at approximately ambient atmospheric pressure; and
effecting explosive cladding.

2. A method according to Claim 1, wherein the combination of mutually different kinds of metallic materials is selected from: titanium or titanium alloy and steel; titanium or titanium alloy and nickel or nickel alloy; and titanium or titanium alloy and aluminium or aluminium alloy.

3. A method according to Claim 1, wherein the bonded interface has at least one combination selected from titanium or titanium alloy and steel; titanium or titanium alloy and nickel or nickel alloy; and titanium or titanium alloy and aluminium or aluminium alloy.

4. A clad metal obtained by explosive bonding of at least two layers of metallic materials to form at least one bonded interface between joined layers of said metallic materials with intermetallic compounds interposed in said bonded interface, said joined layers comprising at least one combination selected from: titanium or titanium alloy and steel with said intermetallic compounds having hardness of not more than 710 Hv; titanium or titanium alloy and nickel or nickel alloy with said intermetallic compounds having hardness of not more than 700 Hv; and titanium or titanium alloy and aluminium or aluminium alloy with said intermetallic compounds having hardness of not more than 250 Hv.

5. A clad metal according to Claim 4, having four layers of aluminium or aluminium alloy, titanium or titanium alloy, nickel or nickel alloy, and steel.

## Patentansprüche

1. Verfahren zur Herstellung eines Mehrschicht-Verbundmetalls durch Explosionsplattieren von mindestens zwei Metallschichten, welches umfaßt:
das Bereitstellen eines metallischen Plattiermaterials und eines metallischen Basismaterials, die voneinander verschieden sind, so daß bei den beiden verschiedenen Metallmaterialien, die in dem Verbundmetall eine verschweißte Grenzfläche bilden sollen, das Verhältnis der Dichte des relativ leichteren metallischen Materials zu der Dichte des anderen schwereren metallischen Materials im Bereich von 0,4:1 bis 0,7:1 liegt,
Anordnen der beiden Materialien derart, daß ein Spalt zwischen dem Plattiermaterial und dem Basismaterial vorgesehen ist,
Einleiten von Argongas in den Spalt bei etwa Atmosphärendruck und
Durchführen des Explosionsplattierens.

2. Verfahren nach Anspruch 1, wobei die Kombination der voneinander verschiedenen Arten von metallischen Materialien unter Titan oder Titanlegierung und Stahl, Titan oder Titanlegierung und Nickel oder Nickellegierung sowie Titan oder Titanlegierung und Aluminium oder Aluminiumlegierung ausgewählt ist.

3. Verfahren nach Anspruch 1, wobei die verschweißte Grenzfläche mindestens eine Kombination enthält, die ausgewählt ist unter Titan oder Titanlegierung und Stahl, Titan oder Titanlegierung und Nickel oder Nickellegierung und Titan oder Titanlegierung und Aluminium oder Aluminiumlegierung.

4. Verbundmetall, erhalten durch Explosionsplattieren von mindestens zwei Schichten von Metallmaterialien unter Bildung mindestens einer verschweißten Grenzfläche zwischen verbundenen Schichten dieser Metallmaterialien, wobei in der verschweißten Grenzfläche intermetallische Verbindungen eingelagert sind, wobei die verbundenen Schichten mindestens eine Kombination umfassen, die ausgewählt ist unter Titan oder Titanlegierung und Stahl, wobei die intermetallischen Verbindungen eine Härte von nicht mehr als 710 Hv haben, Titan oder Titanlegierung und Nickel oder Nickellegierung, wobei die intermetallischen Verbindungen eine Härte von nicht mehr als 700 Hv haben, und Titan oder Titanlegierung und Aluminium oder Aluminiumlegierung, wobei die intermetallischen Verbindungen eine Härte von nicht mehr als 250 Hv haben.

5. Verbundmetall nach Anspruch 4, welches vier Schichten aus Aluminium oder Aluminiumlegierung, Titan oder Titanlegierung, Nickel oder Nickellegierung und Stahl umfaßt.

## Revendications

1. Procédé de production d'un métal plaqué multicouche par placage par explosion d'au moins deux couches métalliques, comprenant :
le fait de prévoir un matériau métallique de placage et un matériau métallique de base différents l'un de l'autre de telle sorte que, dans ces deux matériaux métalliques différents qui doivent former une interface de liaison dans le métal plaqué, le rapport de la densité du matériau métallique relativement plus léger à la densité de l'autre matériau métallique relativement plus lourd est de 0,4:1 à 0,7:1 ;
le fait de disposer les deux matériaux en prévoyant un intervalle entre le matériau de placage et le matériau de base ;
le fait d'introduire de l'argon gazeux dans l'intervalle à environ la pression atmosphérique ambiante ; et
le fait d'effectuer un placage par explosion.

2. Procédé selon la revendication 1, dans lequel la combinaison de types mutuellement différents de matériaux métalliques est choisie parmi : le titane ou un alliage de titane et l'acier ; le titane ou un alliage de titane et le nickel ou un alliage de nickel ; et le titane ou un alliage de titane et l'aluminium ou un alliage d'aluminium.

3. Procédé selon la revendication 1, dans lequel l'interface liée a au moins une combinaison choisie parmi le titane ou l'alliage de titane et l'acier ; le titane ou un alliage de titane et le nickel ou un alliage de nickel ; et le titane ou un alliage de titane et l'aluminium ou un alliage d'aluminium.

4. Métal plaqué obtenu par placage par explosion d'au moins deux couches de matériaux métalliques pour former au moins une interface liée entre des couches réunies de ces matériaux métalliques avec des composés intermétalliques interposés dans cette interface liée, ces couches réunies comprenant au moins une combinaison choisie parmi : le titane ou un alliage de titane et l'acier, ces composés intermétalliques ayant une dureté non supérieure à 710 Hv ; le titane ou un alliage de titane et le nickel ou un alliage de nickel, ces composés intermétalliques ayant une dureté non supérieure à 700 Hv ; et le titane ou un alliage de titane et l'aluminium ou un alliage d'aluminium, ces composés intermétalliques ayant une dureté non supérieure à 250 Hv.

5. Métal plaqué selon la revendication 4, ayant quatre couches d'aluminium ou d'alliage d'aluminium, de titane ou d'alliage de titane, de nickel ou d'alliage de nickel, et d'acier.
